# EUROPÄISCHE PATENTSCHRIFT

(11) **EP 0 683 077 B1**
(45) Veröffentlichungstag und Bekanntmachung des Hinweises auf die Patenterteilung: **26.08.1998**
(21) Anmeldenummer: 95106621.6
(22) Anmeldetag: 03.05.1995
(51) Int. Cl.: B60T 7/08, B60K 20/04

(54) **Kraftfahrzeug mit einem Getriebeschalthebel und einem Handbremshebel in der Fahrzeugmitte**
Motor vehicle with a gear lever and a handbrake lever in the centre of the vehicle
Véhicule automobile ayant un levier de vitesses et un levier de frein à main au centre du véhicule

(30) Priorität: 21.05.1994 DE 4417987
(43) Veröffentlichungstag der Anmeldung: 22.11.1995
(73) Patentinhaber: LEMFÖRDER METALLWAREN AG., 49441 Lemförde (DE)
(72) Erfinder: Ersoy, Metin, Dr.-Ing., D-65396 Walluf (DE)

(56) Entgegenhaltungen:
- WO-A-95/01886
- DE-A- 2 645 982
- DE-A- 3 529 696
- FR-A- 2 654 994
- US-A- 4 545 467

## Beschreibung

Die Erfindung bezieht sich auf ein Kraftfahrzeug, bei dem ein Getriebeschalthebel und ein Handbremshebel in der Fahrzeugmitte entsprechend dem Oberbegriff des Patentanspruches 1 angeordnet sind.

Aus der DE 35 29 696 A1 ist ein Feststellbremshandhabe- und Schalthebelanordnung für Kraftfahrzeuge bekannt, bei dem die Feststellbremshandhabe nach Art eines Zugstocks ausgebildet und unter einem Winkel von ca. 30° bis 60 ° gegen die Horizontale geneigt neben dem Schalthebel im Bodenbereich des Fahrzeugs, vorzugsweise auf einem Mitteltunnel gelagert ist.

Um sowohl den Getriebeschalthebel als auch den als einfachen Doppelhebel ausgebildeten Handbremshebel von unten her montieren zu können, sind bei einer Anordnung gemäß DE 32 14 955 -C2- beide Hebel in Fahrzeuglängsrichtung hintereinander - der Getriebeschalthebel vor dem Handbremshebel - auf einem gemeinsamen Träger angeordnet, der auf einer Platte der Bodengruppe vor deren Vereinigung mit der Karosserie (Hochzeit) aufgesetzt wird. Da der Handbremshebel zur Reduzierung für seine Betätigung erforderlichen Körperkräfte eine gewisse Länge aufweisen muß, ist er nur hinter dem Getriebeschalthebel unterzubringen, so daß die Länge des Trägers beider Hebel von dem erforderlichen Abstand beider Hebel voneinander abhängig ist. Angemessen groß muß der Ausschnitt des Karosserietunnels in der Fahrzeugmitte sein, um beide Hebel bei der Vereinigung der Bodengruppe mit der Karosserie von unten durch diesen Ausschnitt einführen und montieren zu können. Im Fahrgastraum blockiert der Handbremshebel erheblichen Raum für eine andere sinnvolle Nutzung.

Bekannt ist außerdem ein Kurzarmbremshebel mit einem in Abhängigkeit vom Hebelschwenkweg progressiv wirksamen Hebelkraftverstärkungsmechanismus aus einer Druckschrift der Firma STOPFIX-BREMSE, Schröter & Co. GmbH., Bunsenweg 11, 82538 Geretsried, der in Fahrzeugtypen der Firma Mercedes-Benz AG. eingebaut wird. Dieser ebenfalls in der Längsmitte des Fahrzeugs hinter dem Getriebeschalthebel angeordnete Kurzarmhandbremshebel wirkt bei seiner Verschwenkung durch eine Hebelkraftverstärkungsmechanik, zum Beispiel einem eventuell durch Federkraft unterstützten Kurvenrollengetriebe, mit einem Zuwachs an Betätigungskraft. Es werden dadurch Einbaumaße für den Handbremshebel reduziert, aber die Montage erfolgt in der allgemein im Automobilbau praktizierten Weise nach der Vereinigung von Bodengruppe und Karosserie von oben durch den Fahrgastraum.

Der Erfindung liegt die Aufgabe zugrunde, einerseits den Platz hinter dem Getriebeschalthebel im Fahrgastraum für eine andere Nutzung freizumachen und andererseits eine Vormontage des Handbremshebels auf der Bodengruppe zu ermöglichen.

Die Erfindung löst diese Aufgabe durch Ausbildungsmerkmale gemäß Patentanspruch 1.

Dadurch wird die Integration der Schwenklagerung des Handbremshebels und der Lagerung des Getriebeschalthebels in einem gemeinsamen Baumodul erreicht, welches bei geringer räumlicher Ausdehnung auf der Bodengruppe des Fahrzeugs vormontiert werden kann, so daß sowohl der Getriebeschalthebel als auch der Handbremshebel bei der Vereinigung der Bodengruppe mit der Karosserie von unten in den Fahrgastraum eingeführt werden. Ermöglicht wird dies vor allem durch die Verwendung eines Kurzarmbremshebels an sich bekannter Bauart in einem gemeinsamen Modulgehäuse seitlich neben dem Getriebeschalthebel, wobei dieses Gehäuse mit den beiden darin beweglich gelagerten Hebeln auf der Bodengruppe vormontiert wird.

In der Zeichnung ist ein Ausführungsbeispiel dargestellt. Es zeigen:

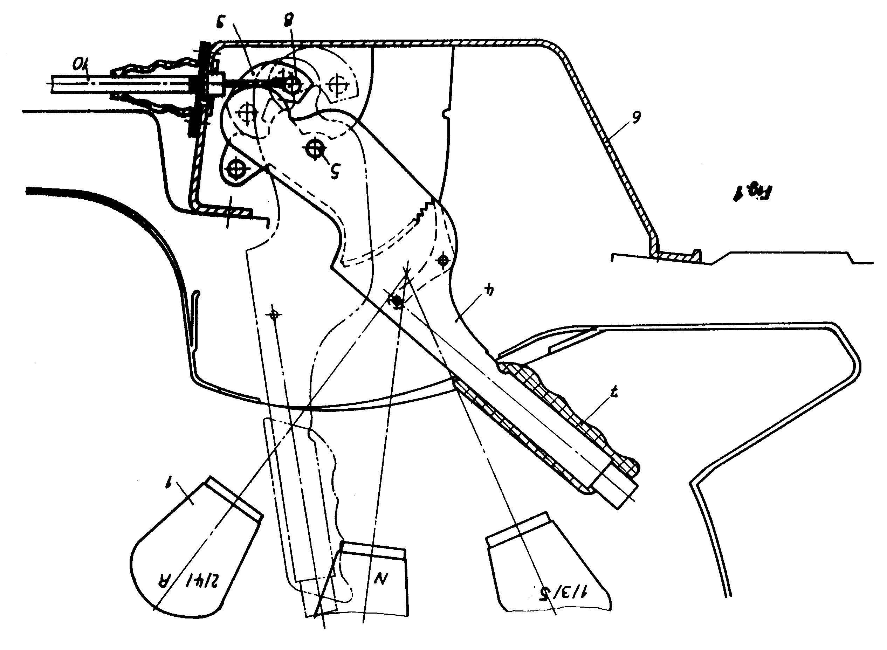

- Figur 1: einen Längsschnitt durch die Anordnung nach der Erfindung parallel zur Fahrzeuglängsmitte und

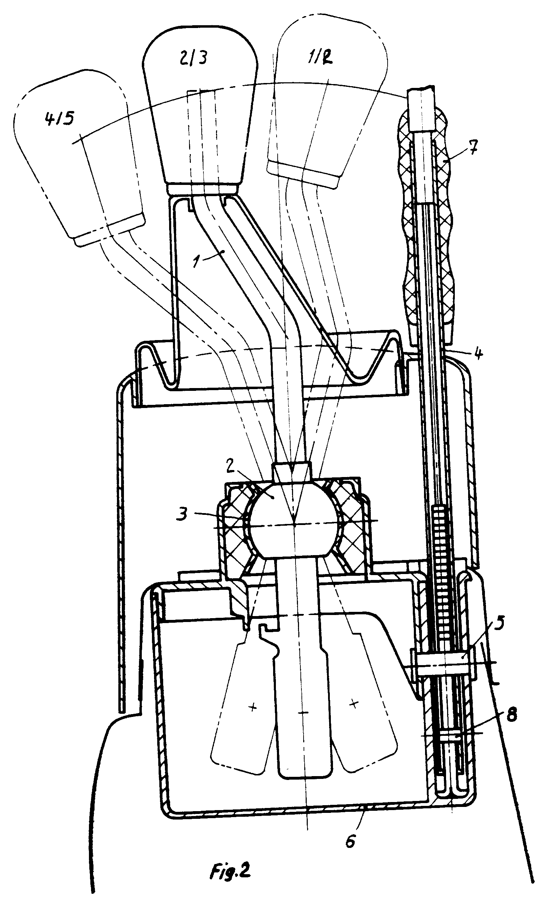

- Figur 2: einen Querschnitt durch die Anordnung entsprechend Figur 1.

In konstruktiver Gestaltung der Erfindungsmerkmale sind der Getriebeschalthebel 1 mit einem Kugelgelenk 2 in einer Gelenkschale 3 einerseits und der Handbremshebel 4 um eine quer zur Fahrzeuglängsmitte liegende Schwenkachse 5 in einem gemeinsamen Gehäuse 6 nebeneinander angeordnet. Das Gehäuse 6 mit dem darin beweglich gelagerten Getriebeschalthebel 1 und dem verschwenkbar gelagerten Handbremshebel 4 ist mit der Bodengruppe des auf der Zeichnung nicht näher dargestellten Kraftfahrzeugs verbunden. Der Getriebeschalthebel 1 und der Handbremshebel 4 liegen somit quer zur Fahrzeuglängsmitte nebeneinander. Der Handbremshebel 4 ist als Kurzarmhebel in an sich bekannter Weise ausgebildet. Das dem Griffende 7 gegenüberliegende Ende des als Doppelhebel ausgebildeten Handbremshebels 4 wirkt mit einer Hebelkraftverstärkungsmechanik zusammen, bei der ein um eine Achse 8 schwenkbarer Kurvenhebel 9 Kurven aufweist, die komplementär zu Kurven am Handbremshebel 4 ausgebildet sind, so daß die auf den Handbremshebel ausgeübten Stellkräfte in Abhängigkeit vom Schwenkweg des Handbremshebels 4 progressiv verstärkt werden, um bei einem möglichst geringen Schwenkwinkel und geringen aufzuwendenden Körperkräften am Griffende 7 ausreichend große Zugkräfte auf den zu den Rädern des Fahrzeuges führenden Seilzug 10 auszuüben. Die Kraftverstärkungsmechanik kann auch in anderer Weise ausgebildet und gegebenenfalls federkraftunterstützt sein.

### BEZUGSZEICHENLISTE:

- 1: Getriebeschalthebel
- 2: Gelenkkugel
- 3: Lagerschale
- 4: Handbremshebel
- 5: Schwenkachse
- 6: Gehäuse
- 7: Griffende
- 8: Schwenkachse
- 9: Kurvenhebel
- 10: Seilzug

## Patentansprüche

1. Kraftfahrzeug, bei dem ein Getriebeschalthebel und ein Handbremshebel in der Fahrzeugmitte nebeneinander angeordnet sind, wobei ein als Kurzarmhebel ausgebildeter und um eine Querachse schwenkbar gelagerter sowie mit einem progressiv wirksamen Hebelkraftverstärkungsmechanismus zusammenwirkender Handbremshebel (4) seitlich neben dem Getriebeschalthebel (1) in einem gemeinsamen Baumodul auf einer Platte der Bodengruppe vor deren Vereinigung mit der Karosserie vormontiert sind.

2. Kraftfahrzeug nach Anspruch 1, dadurch gekennzeichnet, daß der Getriebeschalthebel (1) und der Handbremshebel (4) in einem gemeinsamen Gehäuse (6) gelagert und mit diesem Gehäuse (6) auf der Bodengruppe vor deren Vereinigung mit der Karosserie vormontiert sind.

3. Kraftfahrzeug nach den Ansprüchen 1 und 2, dadurch gekennzeichnet, daß der Handbremshebel (4) in dem gemeinsamen Gehäuse (6), bezogen auf die Fahrzeuglängsrichtung, vor dem Getriebeschalthebel (1) auf der Bodengruppe angeordnet und vormontiert ist.

## Claims

1. Motor vehicle in which a gearshift lever and a handbrake lever are disposed side by side in the centre of the vehicle, a handbrake lever (4), which is constructed as a short-arm lever, is mounted for pivoting movement about a transverse axis and interacts with a progressively operative leverage-amplifying mechanism, being pre-installed laterally beside the gearshift lever (1) in a common structural module on a plate of the floor assembly before the joining thereof to the vehicle body.

2. Motor vehicle according to claim 1, characterised in that the gearshift lever (1) and the handbrake lever (4) are mounted in a common housing (6) and are pre-installed with the said housing (6) on the floor assembly before the joining thereof to the vehicle body.

3. Motor vehicle according to claims 1 and 2, characterised in that the handbrake lever (4) is disposed and pre-installed in the common housing (6) in front, referred to the longitudinal direction of the vehicle, of the gearshift lever (1) on the floor assembly.

## Revendications

1. Véhicule automobile dans lequel un levier de commande de boîte de vitesses et un levier de frein à main sont agencés au centre du véhicule l'un à côté de l'autre et dans lequel un levier (4) de frein à main réalisé sous la forme d'un levier à bras court, monté de façon pivotable autour d'un axe transversal et coopérant avec un mécanisme d'amplification de la force de levier agissant de manière progressive, est monté de façon préliminaire à côté du lever (1) de commande de la boîte de vitesses sur un module de construction commun sur une plaque du dessous de caisse avant leur réunion avec la carrosserie.

2. Véhicule automobile selon la revendication 1, caractérisé en ce que le levier de commande de la boîte de vitesses (1) et le levier de frein à main (4) sont montés dans un boîtier commun (6) et sont montés de façon préliminaire avec ce boîtier (6) sur le dessous de caisse avant leur réunion avec la carrosserie.

3. Véhicule selon la revendication 1 et 2, caractérisé en ce que le levier (4) de frein à main est agencé dans le boîtier (6) commun, par rapport à la direction longitudinale du véhicule, devant le lever de commande de la boîte de vitesses (1) sur le dessous de caisse et est monté de façon préliminaire.
